Europäisches Patentamt

(19) European Patent Office

Office européen des brevets

(11) Publication number: **0 277 162 B1**

(12) **EUROPEAN PATENT SPECIFICATION**

(45) Date of publication of patent specification :
21.11.91 Bulletin 91/47

(51) Int. Cl.⁵ : **A01G 7/00, A01N 65/00**

(21) Application number : 87904878.3

(22) Date of filing : 15.07.87

(86) International application number :
**PCT/FI87/00095**

(87) International publication number :
**WO 88/00433 28.01.88 Gazette 88/03**

(54) **A METHOD AND MIXTURE FOR CONTROLLING THE GROWTH AND PREVENTING GROWTH DISTURBANCES OF PLANTS.**

(30) Priority : 16.07.86 FI 862966

(43) Date of publication of application :
10.08.88 Bulletin 88/32

(45) Publication of the grant of the patent :
21.11.91 Bulletin 91/47

(84) Designated Contracting States :
AT BE CH DE FR GB IT LI LU NL SE

(56) References cited :
EP-A- 0 077 496
AT-B- 381 611
DE-A- 3 314 123
SE-B- 332 737

(56) References cited :
SE-B- 375 682
US-A- 3 655 357
US-A- 4 041 642
US-A- 4 060 414
US-A- 4 060 933

(73) Proprietor : BIOFUTURA OY LTD.
Itätuulenkuja 11
SF-02100 Espoo (FI)

(72) Inventor : HUIKARI, Olavi
Ruusankatu 3 A 13
SF-00250 Helsinki (FI)

(74) Representative : Reitzner, Bruno, Dr.
Patentanwälte Dipl.-Ing. R. Splanemann Dr. B.
Reitzner, Dipl.-Ing. K. Baronetzky Tal 13
W-8000 München 2 (DE)

## Description

The invention relates to a method and a mixture for controlling the growth and preventing growth disturbances of plants. Specifically the invention relates to preventing damages of trees, particularly coniferous trees, caused by atmospheric pollutants. The invention is suitable for being used particularly in such climate areas where the growth of plants follows an annual rhythm according to the seasons.

Atmospheric pollutants are serious threat to the environment (see Häkkinen et al. 1981. Atmospheric pollutants a threat to health and environment. A text book of Helsinki University). Particularly the growth disturbances of trees caused by so called acid rains form a difficult problem.

Presently, it is tried to reduce pollutant emissions but the reduction of the emissions is very slow. The continuous atmosperic pollution changing its quality will probably never be totally avoided. Because of that, also other means to prevent and repair damages have been tried. The most common of these are liming and suitable fertilizing of forests.

Liming aims at improving the pH condition of the soil. On forest soils, however, liming does not bring nearly the same effect as on agricultural land. On forest soils, liming can even be detrimental. By means of fertilizing, particularly by means of suitable micronutrient fertilizing, it is possible to repair the nutrient balance of the soil, and in this way to remove reasons of certain growth disturbances. However, growth disturbances caused by atmospheric pollutants can hardly be prevented or repaired by means of liming or conventional fertilizing.

Now it has been invented that growth disturbance caused to plants particularly by atmospheric pollutants can be prevented by dosing phytochrome to the plants. US-A-4 109 414 discloses a method for controlling the abscission of plant parts by illuminating the plants during night periods with light having a wavelength selected from the group consisting of wavelenghts in the order of 420 nm, 550 nm, 660 nm and 740 nm. This document does not suggest the role of phytochrome activation or deactivation in the control of growth of plants having annual growth rhythm.

Now, a method for controlling the growth and preventing growth disturbances of plants has been found, which method is characterized in that phytochrome or its or its structural components is (are) dosed to the plants.

The present invention also relates to a mixture suitable for being used for controlling the growth and preventing growth disturbances of plants, which mixture is characterized in that it contains phytochrome or its structural components.

Preferred embodiments of the invention are recited in the dependent claims.

A particularly good result is obtained if boron is simultaneously dosed.

Phytochrome can be dosed for instance by means of spraying injecting or by absorption through roots.

Phytochrome is a water soluble chromoprotein having a molecular weight of 55 000 to 62 000. As a chromphoric group, it has phycosyanine linked to the protein section. It is previously known that phytochrome has an important part in many vital funtions of a plant.

The importance of the precursor synthesis of phytochrome and the presence of certain so called micronutrients is illustrated by the following scheme

```
                        change of
                        increasing light
    inactive          660 nm ──────────⟩   green         active
    rest      P660    + B,Cu,Zn,Mo           P730   photomorphosis
          blue green  ⟨──────── 730 nm
                        change of
                        decreasing light
```

The assumed molecular structure (both in the active and in the passive form) is illustrated by the following formula:

P660 (blue green)

PROT.

areas where changes occur

730    660

P730 (green)

PROT.

Isolation of phytochrome has been described for instance in publication Chem. Biochem, Plant Pigm., 2nd ed. 1976, 2, pages 356-357.

Now it has been found out that phytochrome also has a very important part in the genetic depence of the plants to locally correctly timed annual rhythm. Particularly it has been observed that co-operation of phytochrome and boron is of prime importance in controlling the said annual rhythm. In spring, the first necessary step for starting growth is the activating of phytochrome. It starts formation of the hormones of the growth period which together with enzymes cause growth correlating with the air temperature development. In autumn, the last step in transferring to winter rest is again the deactivating of phytochrome. In respect of succesful changes it is important that in the change situation, meristematic cells have main nutrients and micronutrients available in right proportions.

The wavelength distribution of the red and infrared radiation of the sun light falling upon earth varies according to the season at each latitude and at a certain height from the sea level. In spring, the radiation maximum moves towards longer wavelengths and in autumn again towards shorter ones. The activating and deactivating of phytochrome has been observed to be dependent on this variation: phytochrome is activated at a wavelength of about 730 nm and deactivated at a wavelength of about 640 nm. Besides, it has now been noticed that boron catalyzes the activating-deactivating reactions of phytochrome. A boron atom is capable of donating two electrons to a phytochrome molecule so that phytochrome is activated. When deactivated, phytochrome again donates away these electrons. Apparently also copper, zinc and molybdenum affect these reactions.

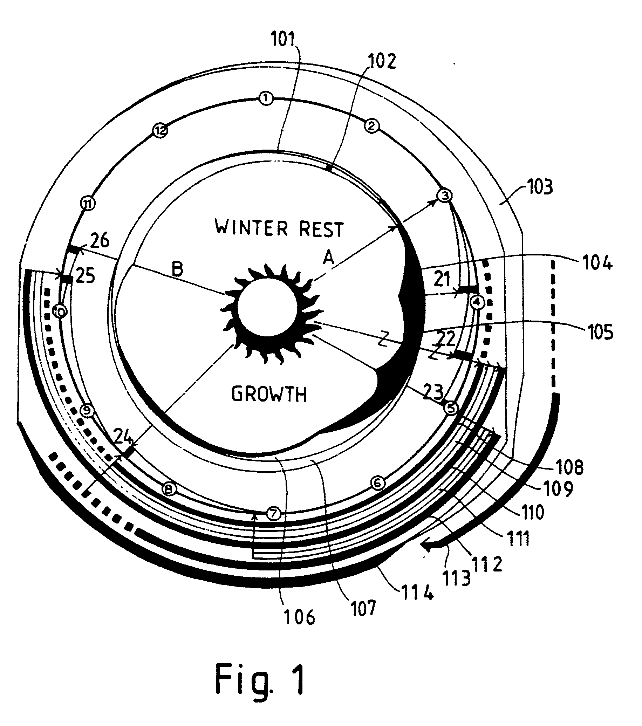

Figure 1 shows a so called H-clock based on research carried out earlier by the inventor (published for instance in All. Forstz. 1974), illustrating the annual progress of the growth of a coniferous tree in a snow and ground frost climate.

The months of the year 1 to 12 have been shown on the periphery of the clock. Besides, the openings of three locks 21 to 23 and the closings of three locks 24 to 26 have been shown on the periphery.

The openings of the locks 21 to 23 are:

21. The limit of the day length

3

22. Thermal limit of the trunk

23. Thermal sum limit of the air

The closings of the locks 24 to 26 are:

24. Formation of new growth buds

25. Preparation for dormancy. Old needles fall. So called semi-products are stored. Water is removed from cells. The thermal limit of the trunk finishes the step.

26. Abscisine acid closes the third lock and stops protein synthesis. Phytochrome prevents photosynthesis.

In the figure, the sun controlling the annual rhythm is shown in the middle. Hormone and enzyme variations are shown on a separate circle from where the orders transmitted by them have been led to the actual growth circle. Partial growth occurences most important to cell formation have been shown as separate auxiliary circles. A circle illustrating the ground frost and the growth stages of roots is farthest out.

In respect of the reproduction circuit and the develpment of seedlings things are in many ways different as in respect of the growth procedure of big trees (over 5 m). The clock shown for instance how the trees in Finland have been adjusted to utilize the great amount of radiation and the long day in spring. Also the autumn is efficiently utilized.

The locks show that the trees are well equipped to survive even in difficult environmental conditions. By means of the H-clock it is easier to understand the vital functions of trees.

In addition, the following reference numbers have been used in the figure:

101. Phytochrome

102. Abscisine acid

103. Ground frost

104. Gibberellines

105. Auxins

106. Cytokines

107. Enzymes

108. Photosynthesis

109. Water intake

110. Nutrient intake

111. Height growth

112. Thickness growth

113. Achieved energy utilization advantage

114. Root growth

It has been observed that at point A of the H-clock, the change of red 725-730 nm activates phytochrome and at point B, twilight 660 nm deactivates it.

The correct timing of the annual rhythm is vital to plants (see Silva Fennica 1986 vol. 20 No. 1 pp. 9 to 22). A too early start or too late finishing of the growth subjects plants particularly to frost. A too late start or too early finishing of the growth again may make the growth period too short for survival. The importance of various environmental factors to the genotype of forest trees has been previously analyzed, see Huikari, Comm. Inst. For. Fenn. 64. 1. 1967 and for instance Comm. Inst. For. Fenn. 116. 1983.

Atmospheric pollutants, particularly sulphur and its compounds destroy phytochrome so that the control of annual rhythm is disturbed which again subjects the plant to various destructive factors. So damages caused in this way can be prevented by dosing phytochrome or its structural components to plants. Structural components in this connection mean mainly the portion remaining unchanged in the phytochrome molecule formula presented above and not surrounded by a broken line.

In addition, the functioning of phytochrome can be secured by dosing to the plants substances protecting phytochrome, substances or components activating its functioning or increasing its formation. Substances protecting phytochrome are in particular potassium and also magnesium which strengthen cell walls. As outside protective agents, different fixing agents and wax substances can be used.

Phytochreme is obtained for instance by extracting it from crushed plant leaves. Particularly rich in phytochrome are young etiolated leaves.

According to the invention, many kinds of preparations containing phytochrome can be produced, depending on the dosage form used and the object in each case. Among the preparations, nutrient mixtures for park trees, nutrient lime mixtures for forests, annual rhythm nutrient mixtures for perennials, substrate mixtures and injection nutrient mixtures are particularly to be mentioned.

One nutrient lime mixture, its production and use will below be described in detail.

Example 1. Nutrient lime mixture

| | |
|---|---|
| Ash | 1 200 g |
| $H_2O$ | 200 g |
| Urea phosphate solution, containing 40 % of urea phosphate dissolved in water | 700 g |
| Granular lime | 1 700 g |
| MgO | 400 g |
| $K_2O$ | 400 g |
| Phytochrome solution, containing 0,2 % of phytochrome dissolved in water | 400 g |

Boron is added to the mixture 0,1 % of the mixture, or according to need other micronutrients, such as copper, zink and molybdenum. They are added most suitably mixed in phytochrome solution and they are most suitably obtained from ash.

The substances are mixed in the above order into a granular mixture.

Wood ash or peat ash gives the preparation a natural micronutrient composition formed in vegetation. The potassium lye of ash gives potassium in great amounts and raises the pH which makes a prolonged neutralizing effect of lime possible without shock effects.

Granular lime is corroded strongly by the acid urea phosphate and microcavities are formed in it and part of the ash is located in these microcavities. In this way, a preparation of long duration and retarded effect is obtained Instead of urea phosphate, also some other acid nitrogen and/or phosphor compound can be used.

Urea phosphate gives a sufficiently small nitrogen and phosphor addition, and simultaneously neutralizes a too high pH. Phosphor remains in the product at the most 3 % of the total amount of the mixture, calculated as $P_2O_5$. A preferable pH, in respect of the stability of the phytochrome, is about 7,4 to 7,8.

The heat required for drying the granules is obtained from the exothermal reactions occuring in the mixing.

The phytochrome solution or phytochrome component solution is preferably added last so that is will not disintegrate.

The mixture is used as general spreading 500 to 2 000 kg/ha. To a single tree, 5 to 20 kg of the mixture is given, and to young seedlings 50 to 100 g and in addition about 3 g per each cm of growth height.

The mixture can also be made into a water solution. When watering to soil, a 0,2 to 0,5 % water solution is used. For spraying leaves, a 0,5 to 0,7 % solution is used. Such an amount of the solution is given that the soil or correspondingly the foliage get wet.

As an injection solution, a 0,05 % solution made in pure water can be used. The solution is sprayed into a liquid flow rising from the earth.

In the above, all percentages are weight percentages.

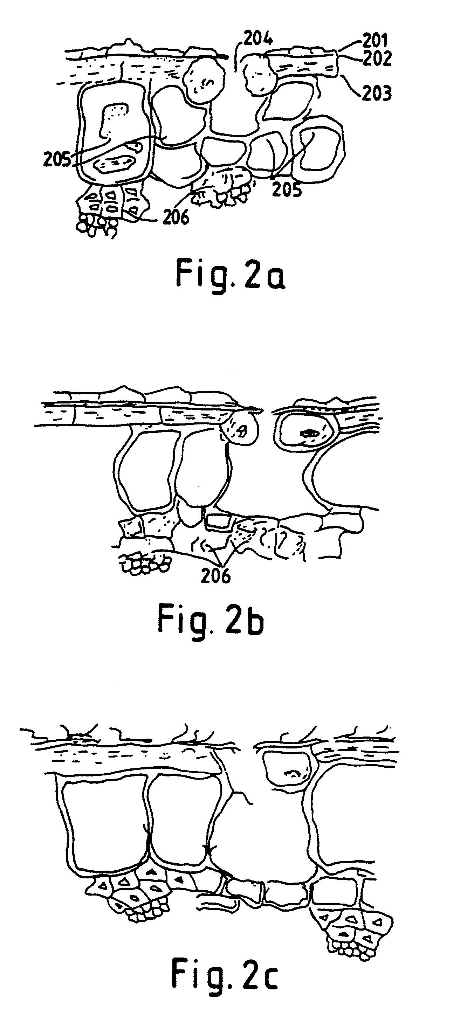

Figures 2a, 2b and 2c show differences in the structural changes of a normal needle, an eskimosis-growth disturbance needle and a needle injured by atmospheric pollutants or acid rain. The needles have been shown in cross section taken across a stomatal area. Eskimosis caused by lack of boron and the capability of phytochrome to function have an important physiological connection. A boron atom is able by means of a positive electron to fill the electron-hole pair formed by the disturbance caused by a photon.

The following reference numbers have been used in Figures 2a to 2c

201. Protective wax
202. Cuticule
203. Epidermis
204. Stomata

205. Photosynthetic tissue

206. Vascular tissue

In Figure 2a all these are normal.

In Figure 2b, protective wax, cuticule, epidermis, stomata and photosynthetic tissue are normal, whereas vascular tissue is not formed. The injury is of internal origin.

In Figure 2c, protective wax is corroded, cuticule is injured and epidermal pectins do not function. Stomata is injured and photosynthetic tissue functions with injuries. Vascular tissue functions but the pigment system has been injured. Injury is of external origin.

The resistance of protective wax against atmospheric pollutants is improved by means of the mixture according to the invention. Boron and potassium secure the functioning of phytochrome and eliminate eskimosis.

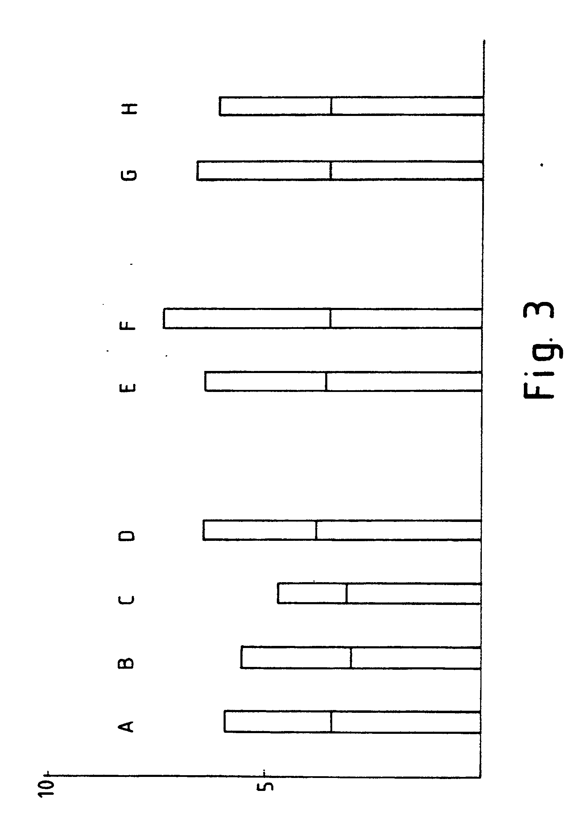

Figure 3 shows graphically test results which prove the efficienty of the mixture according to the invention. The tests have been carried out at Muhos forest reserach station of the Forest Research Institute.

The vertical scale shows the heigth of the seedling (cm).

The test was carried out by growing 12 pine seedlings in each pot and by measuring the growth averages after about 1 month. The results obtained from various pots are shown as columns A to H.

The upper section of each column shows the average of the growth observed and the total height of the column shows the average of the total height of the plant.

A-D was a control group which was watered by means of distilled water (100 ml every second day).

E-F pots were watered by means of a solution containing the product according to the invention (100 ml every second day; 10 ml of nutrient/990 ml of water).

G-H pots were sprayed by means of a solution similar to the ones used for pots E-F (100 ml every second day).

The test results show that in pots E-F the growth was on an average clearly greater than in pots A-D. Also in pots G-H the growth was better than in pots A-D, even though the results were not as good as in pots E-F.

## Claims

1. A method for controlling the growth and preventing growth disturbances of plants, characterized in that phytochrome or its structural components is (are) dosed to the plants.

2. A method according to claim 1, characterized in that phytochrome is dosed to the plants following annual growth rhythm.

3. A method according to claims 1 or 2 for controlling the growth and preventing growth disturbances of coniferous trees.

4. A method according to anyone of claims 1 to 3 characterized in that in addition, a substance protecting phytochrome, a substance activating the functioning of phytochrome or a substance increasing the formation of phytochrome is dosed to the plants.

5. A method according to claim 4, characterized in that potassium or magnesium is dosed as a substance protectins phytochrome.

6. A method according to claims 4 or 5, characterized in that a substance donating electrons to a phytochrome molecule is dosed as a substance activating the functioning of phytochrome.

7. A method according to claim 6, characterized in that copper, zinc, molybdenum or (preferably) boron is (are) dosed as the substance donating electrons.

8. A mixture suitable for being used for controlling the growth and preventing growth disturbances of plants, characterized in that it contains phytochrome or its structural components.

9. A mixture according to claim 8, characterized in that it additionally contains substances donating electrons to a phytochrome molecule.

10. A mixture according to claim 9, characterized in that the substance donating electrons is copper, zinc, molybdenum or (preferably) boron.

11. A mixture according to any of claims 8 to 10, characterized in that it additionally contains potassium or magnesium.

12. A mixture according to claim 11, characterized in that it additionally contains urea phosphate and ash.

## Patentansprüche

1. Verfahren zur Steuerung des Wachstums und zur Verhinderung von Wachstumsstörungen von Pflanzen, dadurch gekennzeichnet, daß Phytochrom oder seine strukturellen Komponenten den Pflanzen zudosiert wird (werden).

2. Verfahren nach Anspruch 1, dadurch gekennzeichnet, daß das Phytochrom entsprechend dem jährlichen Wachstumsrhythmus den Pflanzen zudosiert wird.

3. Verfahren nach Anspruch 1 oder 2 zur Steuerung des Wachstums und zur Verhinderung von Wachstumsstörungen von Koniferen.

4. Verfahren nach einem der Ansprüche 1 bis 3, dadurch gekennzeichnet, daß zusätzlich eine Substanz zum Schutz des Phytochroms, eine Substanz, die die Funktionsweise von Phytochrom aktiviert oder eine Substanz, die die Bildung von Phytochrom fördert, den Pflanzen zudosiert wird.

5. Verfahren nach Anspruch 4, dadurch gekennzeichnet, daß Kalium oder Magnesium als Substanz zum Schutz von Phytochrom zudosiert wird.

6. Verfahren nach Anspruch 4 oder 5, dadurch gekennzeichnet, daß eine Substanz, die Elektronen an ein Phytochrom-Molekül abgibt, als Substanz zur Aktivierung der Funktionsweise von Phytochrom zudosiert wird.

7. Verfahren nach Anspruch 6, dadurch gekennzeichnet, daß Kupfer, Zink, Molybdän oder (vorzugsweise) Bor als elektronenabgebende Substanz zudosiert wird (werden).

8. Mischung, die zur Steuerung des Wachstums und zur Verhinderung von Wachstumsstörungen von Pflanzen geeignet ist, dadurch gekennzeichnet, daß sie Phytochrom oder seine strukturellen Komponenten enthält.

9. Mischung nach Anspruch 8, dadurch gekennzeichnet, daß sie zusätzlich Substanzen enthält, die Elektronen an ein Phytochrom-Molekül abgeben.

10. Mischung nach Anspruch 9, dadurch gekennzeichnet, daß die elektronenabgebende Substanz Kupfer, Zink, Molybdän oder (vorzugsweise) Bor darstellt.

11. Mischung nach einem der Ansprüche 8 bis 10, dadurch gekennzeichnet, daß sie zusätzlich Kalium oder Magnesium enthält.

12. Mischung nach Anspruch 11, dadurch gekennzeichnet, daß sie zusätzlich Harnstoffphosphat und Asche enthält.


**Revendications**

1. Procédé pour contrôler la croissance et prévenir les perturbations de la croissance de plantes, caractérisé en ce que du phytochrome ou ses composants structurels sont fournis aux plantes.

2. Procédé selon la revendication 1 caractérisé en ce que le phytochrome est fourni aux plantes suivant le rythme annuel de croissance.

3. Procédé selon la revendication 1 ou 2 pour contrôler la croissance et prévenir les perturbations de la croissance de conifères.

4. Procédé selon l'une quelconque des revendications 1 à 3 caractérisé en ce que, en plus, une substance protégeant le phytochrome, une substance activant la fonction du phytochrome ou une substance augmentant la formation de phytochrome est fournie aux plantes.

5. Procédé selon la revendication 4 caractérisé en ce que du potassium ou du magnésium est fourni en tant que substance protégeant le phytochrome.

6. Procédé selon la revendication 4 ou 5, caractérisé en ce qu'une substance donneuse d'électrons à une molécule de phytochrome est fournie en tant que substance activant la fonction du phytochrome.

7. Procédé selon la revendication 6, caractérisé en ce que du cuivre, du zinc, du molybdène ou (de préférence) du bore est fourni en tant que substance donneuse d'électrons.

8. Mélange approprié pour être utilisé au contrôle de la croissance et à la prévention des perturbations de la croissance de plantes, caractérisé en ce qu'il contient du phytochrome ou ses composants structurels.

9. Mélange selon la revendication 8, caractérisé en ce qu'il contient additionnellement certaines substances donneuses d'électrons à une molécule de phytochrome.

10. Mélange selon la revendication 9, caractérisé en ce que la substance donneuse d'électrons est le cuivre, le zinc, le molybdène (ou de préférence) le bore.

11. Mélange selon l'une quelque de revendications 8 à 10, caractérisé en ce qu'il contient additionnellement du potassium ou du magnésium.

12. Mélange selon la revendication 11, caractérisé en ce qu'il contient additionnellement du phosphate d'urée et des cendres.

Fig. 1

Fig. 2a

Fig. 2b

Fig. 2c

9

Fig. 3